# EUROPEAN PATENT SPECIFICATION

(11) **EP 4 452 714 B1**
(45) Date of publication and mention of the grant of the patent: **19.08.2026**
(21) Application number: 22840274.9
(22) Date of filing: 22.12.2022
(51) Int. Cl.: B60V 1/04, B64F 1/02

(54) **VEHICLE FOR CAPTURING A FALLING OBJECT**
FAHRZEUG ZUR ERFASSUNG EINES FALLENDEN OBJEKTS
VÉHICULE DESTINÉ À CAPTURER UN OBJET TOMBANT

(30) Priority: 24.12.2021 GB 202119022
(43) Date of publication of application: 30.10.2024
(73) Proprietor: Space Forge Limited, Cardiff South Glamorgan CF3 2EY (GB)
(72) Inventor: BACON, Andrew, Bradley Stoke, South Gloucestershire BS32 8TP (GB); TUDORACHE, Radu, Cardiff South, Glamorgan CF10 4DL (GB); SHERRY, Florence, Westcliffe, Sleaford, Lincolnshire NG34 8RD (GB)
(74) Representative: Hunter, Christopher Jack Owen
(86) International application number: PCT/GB2022/053353
(87) International publication number: WO 2023/118873

(56) References cited:
- CN-B- 108 945 328
- EA-B1- 030 845
- RU-A- 2020 127 421
- US-A1- 2018 105 271
- US-B1- 8 498 756

## Description

### FIELD OF THE INVENTION

The present invention relates to a vehicle for capturing a falling object. In particular, the present invention relates to a vehicle for capturing a spacecraft following atmospheric re-entry.

### BACKGROUND OF THE INVENTION

There has recently been interest in carrying out manufacturing processes in outer space (e.g., in the Earth's orbit). There are several benefits associated with manufacturing in such an environment, including access to a vacuum with a pressure many orders of magnitude lower than artificial vacuums available on Earth, and temperatures close to absolute zero. With regard to crystal growth, the microgravity found in orbit allows for the formation of larger crystals with near perfect shapes.

Manufacturing products in orbit raises the issue of how to return the products safely back to Earth. An early solution proposed as part of the US Air Force's CORONA satellite program involved the air capture of film canisters dropped from orbit by reconnaissance satellites. The capsules deployed a parachute and the lines were captured by a system towed by an aircraft. Whilst effective, this required highly skilled pilots, and there was significant risk to aircraft from collision with the capsule.

More recently, SpaceX (RTM) has demonstrated ships which are able to capture objects falling from space. The ships are held at a fixed location, which requires the falling object to be able to independently manoeuvre to the location, using additional guidance equipment on the falling object. Including such guidance equipment significantly increases costs. Furthermore, conventional manned ships have limited manoeuvrability, and safety risks to the crew must be considered.

EA 030845 B1 describes a catcher of falling rocket stages.

US 8,498,756 B1 describes a reusable space flight launch system for precision landing of reusable space flight hardware, comprising a lightweight aerodynamic device on board the flight hardware such as a parachute, and one or more translating ground-based vehicles such as a hovercraft that include active speed, orientation and directional control. The ground-based vehicle manoeuvres itself into position beneath the descending flight hardware, matching its speed and direction, and captures the flight hardware. The ground-based vehicle contains propulsion, command and guidance, navigation, and control (GN&C) functionality, as well as space flight hardware landing cushioning and retaining hardware. The ground-based vehicle propulsion system enables longitudinal and transverse manoeuvrability independent of its physical heading.

### SUMMARY OF THE INVENTION

The present invention relates to the optimal design of a vehicle for capturing objects falling from the air or outer space. The vehicle is particularly designed for the capture of spacecraft, such as satellites, re-entering the atmosphere from orbit, but could also be used for capturing other objects (such as launch vehicle fairings and stages) or air dropped cargo (such as aid or supplies). Such applications require a balance between speed, manoeuvrability, endurance, capture capacity and transmitted shock to the landing item. A high top speed, manoeuvrability and endurance are required in order to be able to track fast evolving predictions of where the dropped item will land, which may change direction suddenly due to wind gusts if the item is falling with a low terminal velocity (such as under a parachute). For an object re-entering the atmosphere, such predictions may evolve over tens of kilometres over the period of tens of minutes in directions that cannot be well known in advance, and so the vehicle has to be able to change direction responsively by having a short braking distance, high linear and rotational acceleration, and a small turning circle. This ability reduces the requirements for active guidance control on the falling object thereby making its construction simpler, which is of great advantage when applied to space technology where the cost per kilogram to launch is high. In order to be operationally useful, the capture vehicle needs to be able to operate in a variety of weather and sea state conditions, particularly those in which an unmanned aerial vehicle (UAV) or a conventional ship would struggle to maintain station or change direction.

In accordance with an aspect of the invention, there is provided a vehicle for capturing a falling object, the vehicle comprising:
a plurality of air cushion units, wherein each of the air cushion units is configured to generate a propulsive force to drive the vehicle and a lift force to elevate the vehicle;
a linking structure arranged to link the air cushion units together; and
a receiver arranged to receive the falling object, wherein the receiver is coupled to the linking structure.

The linking structure may comprise a perimeter structure having a polygonal shape having n sides, the polygonal structure comprising n perimeter rods each corresponding to a side of the shape, wherein n is a natural number greater than or equal to 3.

The polygonal shape may be a regular polygonal shape, and/or the polygonal shape may be a hexagonal shape, and the perimeter structure may comprise six perimeter rods.

The linking structure may further comprise a plurality of leg rods, each leg rod having a proximal end coupled to the perimeter structure and a distal end coupled to a respective air cushion unit.

Each leg rod may comprise a first section comprising the proximal end and a second section comprising the distal end, wherein the second section extends perpendicularly from a plane defined by the respective air cushion unit and the first section is inclined to the first section.

The plurality of leg rods may comprise n pairs of leg rods, wherein n is a natural number greater than or equal to 3, each pair of leg rods having proximal ends coupled together at a portion of the perimeter structure.

The proximal ends of the leg rods may be coupled to the perimeter structure via hinge joints.

The linking structure may further comprise a support structure arranged to support the receiver, optionally wherein the support structure is arranged to place the receiver under tension.

The support structure may comprise a plurality of receiver support rods arranged to support the receiver, each receiver support rod having a proximal end coupled to the perimeter structure and a distal end coupled to the receiver.

Each receiver support rod may extend from the perimeter structure inclined to a plane defined by the perimeter structure.

The receiver may comprise a perimeter cable which extends around the perimeter of the receiver, between the distal ends of the receiver support rods, wherein the perimeter cable is arranged to place the receiver under tension.

The receiver may comprise a plurality of radial cables, each radial cable extending between two opposed receiver support rods.

The vehicle may further comprise a plurality of central radial rods, each central radial rods having a distal end coupled to the perimeter structure and a central end coupled to a central coupling at a centre of the linking structure.

Each radial rod may extend from the perimeter structure inclined to a plane of the perimeter structure, and/or the radial rods may be under compression.

The receiver may comprise one or more nets or sheets.

The receiver may have a polygonal shape having n sides, where n is a natural number greater than or equal to 3.

The polygonal shape may be a regular polygonal shape and/or the polygonal shape may be a hexagonal shape.

Each of the plurality of air cushion units may be independently controllable, or controllable in pairs or groups, and may comprise a power source configured to provide power for the air cushion unit.

Each of the plurality of air cushion units may comprise a first fan arranged to generate the propulsive force and a second fan arranged to provide lift.

Each of the plurality of air cushion units may have a centre of mass which is substantially coincident with the geometric centre of the air cushion unit.

Each of the plurality of air cushion units may comprises a controller configured to control the air cushion unit and a transceiver.

The vehicle may further comprise a master controller having a transceiver and configured to communicate with and control the controllers of the air cushion units, which act as slaves.

The transceiver of the master controller further may be arranged to receive signals from an external electronic device.

One of the controllers may act as the master controller.

The vehicle may further comprise a solar power system configured to generate power for the plurality of air cushion units.

The vehicle may comprise n air cushion units, where n is a natural number greater than or equal to 3, optionally wherein n equals 12.

The plurality of air cushion units may comprise a plurality of pairs of air cushion units, wherein the two air cushion units in each pair of air cushion units are fixed in space relative to each other; each pair of air cushion units is arranged to rotate about an axis lying in a plane; the plurality of planes substantially coincide or are parallel.

The vehicle of the present invention provides a good balance between the competing requirements of endurance, speed, carrying capacity and manoeuvrability. Unlike conventional ships, the vehicle is able to quickly change direction with a small turning circle due to its high thrust-to-weight ratio, and has a variable braking distance due to lift-to-surface friction control. Helicopters and UAVs also have this ability; however, the vehicle of the present invention has significantly better failure modes - if there is a significant issue, the vehicle stops but is able to remain floating. This also allows the vehicle to remain on station at sea for extended periods of time in the optimal location for a capture, whilst expending little energy. The vehicle of the present invention utilises hovercraft that have top speeds and safe failure modes that match high performance boats; manoeuvrability that can match aircraft; and endurance and cost that match UAVs. The environmental effect on sea life is also reduced compared to conventional ships, as the moving parts of the vehicle (and the associated noise) are above the water line.

Using multiple identical hovercraft/air cushion units rather than one single large hovercushion means that the vehicle of the present invention is more resilient to failure, as the vehicle can still float and travel with the failure of multiple hovercraft. Furthermore, using multiple identical hovercraft means that the vehicle of the present invention is better suited to parallel manufacture, and is lower cost. In addition, the wide distribution of the hovercraft allows the use of fixed thrust fans to provide steering via distributed control. This can be compared to the ruddering system used on the ducted fan on many hovercraft designs which creates an additional mechanism that can fail, and has limited angles on achievable thrust vectors. Additionally, use of multiple identical hovercraft improves the responsiveness and manoeuvrability of the vehicle. Other advantages will be apparent to the skilled person and are also highlighted herein.

### BRIEF DESCRIPTION OF THE DRAWINGS

Embodiments of the invention will now be described with reference to the accompanying drawings, in which:
Figure 1 is a perspective overview of a vehicle according to an embodiment of the invention;
Figure 2A is a perspective view of the frame of the vehicle shown in Figure 1;
Figure 2B is a plan view of the frame shown in Figure 2A;
Figure 2C is a side-on view of the frame shown in Figure 2A;
Figure 3 is a side-on view of a perimeter rod of the frame shown in Figure 2A, coupled to perimeter couplings;
Figure 4 is a front view of the perimeter coupling shown in Figure 3, coupled to a leg coupling;
Figure 5A is a perspective view of an air cushion unit forming part of the vehicle of Figure 1;
Figure 5B is an exploded perspective view of the air cushion unit shown in Figure 5A; and
Figure 5C is a cross-sectional side view of the air cushion unit shown in Figure 5A.

### DETAILED DESCRIPTION OF EMBODIMENTS

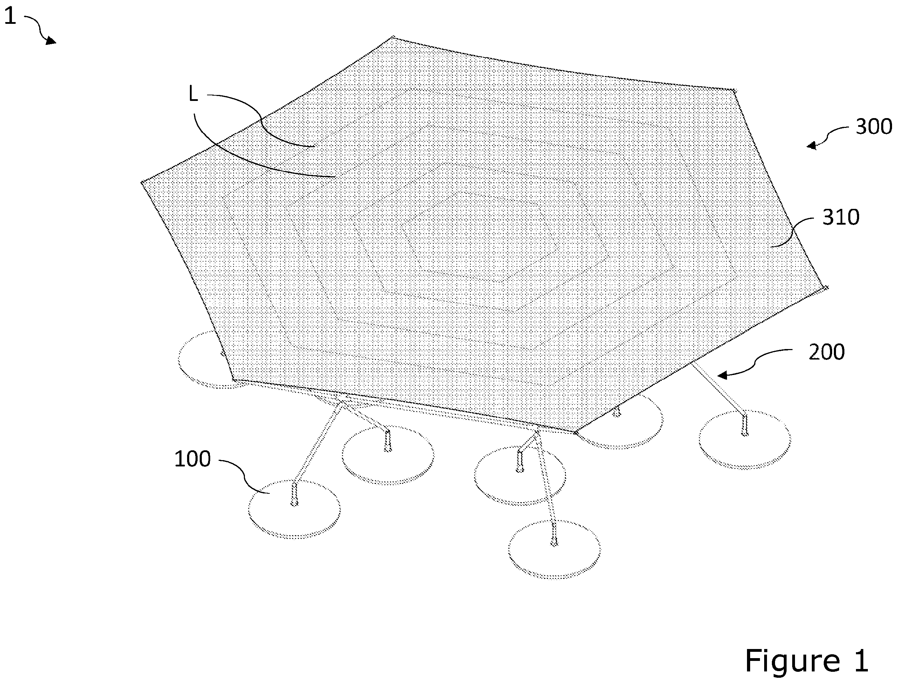

Figure 1 is a perspective overview of a vehicle arranged to capture a falling object, such as a satellite (not shown).

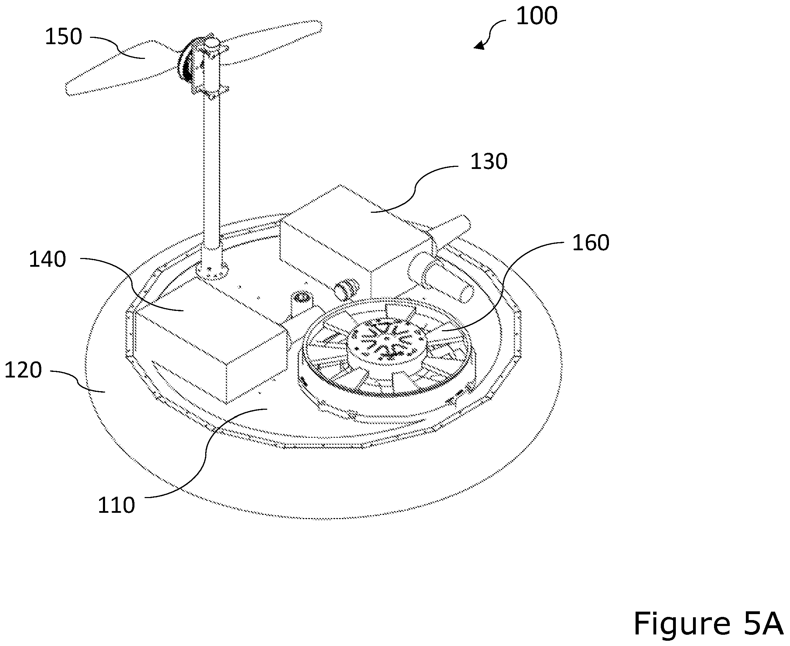

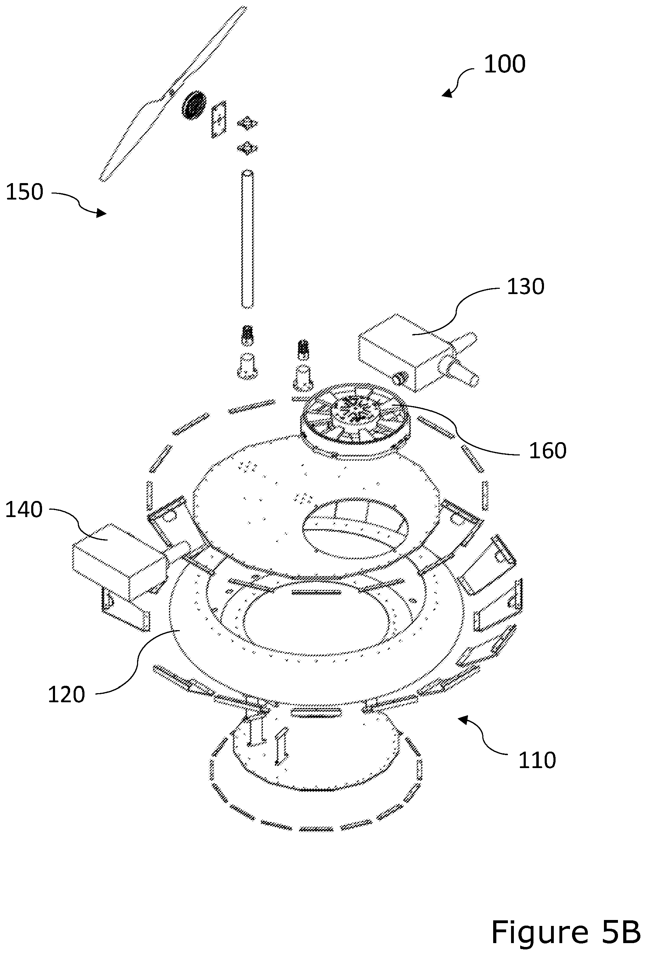

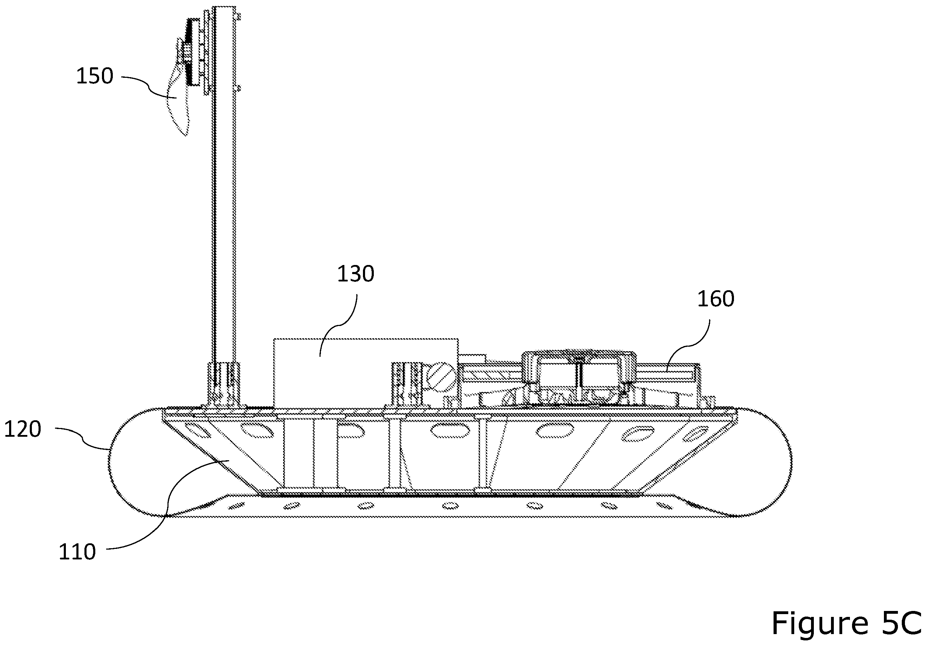

The vehicle 1 comprises several independently controllable air cushion units (or hovercraft) 100 which are linked together by a linking structure/frame 200. The vehicle 1 also includes a receiver 300 which is arranged to receive the falling object. In the present example, twelve air cushion units 100 are provided. The air cushion units 100 produce lift so that the vehicle is elevated over a surface (e.g., water or land), and also produce propulsive force to drive the vehicle horizontally. The air cushion units 100 are shown in a simplified form in Figure 1 and are shown in detail in Figures 5A-5C and described in detail below.

The frame 200 is comprised of multiple elongate rods coupled together by couplings. In the present embodiment, each rod is comprised of a carbon fibre tube with plastic caps secured at each end. The caps can be secured in the end of each rod using glue or other adhesive. Carbon fibre is used since it has a good strength to mass ratio; however, other suitable materials may be used, such as metals and plastics, e.g., aluminium, plastic, titanium alloy, fibreglass, marine grade steel. The caps of the rods are inserted into the couplings, and are attached to the couplings using bolts. The couplings may be made from any suitable lightweight material, such as plastics and metals, e.g., aluminium alloy, marine grade steel, titanium alloy, ABS plastic, acetal. In the present example, the couplings are made from polytetrafluoroethylene (PTFE).

The receiver 300 defines a "capture area" for the falling object. The receiver 300 includes an energy absorbing surface that is arranged to deform upon impact of the object, thereby providing a 'soft landing' for the object. In the present embodiment, the receiver 300 includes a net 310. The net is made out of Nylon Coated Heavy Duty 304 Stainless Steel Cable Rope. Other heavy duty nets made of plastic could be used, such as polyethylene, polypropylene and High Density Polyethylene resin (HDPE). In other embodiments, the receiver may include multiple nets connected together. In some embodiments, the receiver includes a sheet, or includes multiple sheets connected together.

In the present embodiment, the receiver 300 has the shape of a regular hexagon and has a width of around 6m. In other embodiments, receivers with other regular polygonal shapes may be used, e.g., receivers with triangular, square or octagonal shapes. The regular polygonal shape of the receiver 300 distributes the force of an object impact evenly, reducing the variation in impact shocks according to where the object lands in the receiver 300. However, this is not intended to be limiting, and in some embodiments receivers with irregular polygonal shapes, such as rectangles, may be used.

The receiver 300 is held under tension. As explained below, the tension of the receiver 300 can be adjusted to an optimum value for the size and mass of the object to be caught. A relatively low tension reduces the impulse of the landing shock for smaller objects (which could be critical for catching fragile items), while a relatively high tension allows larger objects to be caught by reducing the deformation of the receiver 300. The receiver 300 may be imprinted with markers, e.g., lines, which provide a visual indication of the tension as the net is stretched. In the present embodiment, the net 310 is imprinted with a series of concentric hexagonal markers L. As the net 310 is stretched, the hexagonal markers move outwards towards the perimeter of the net 310.

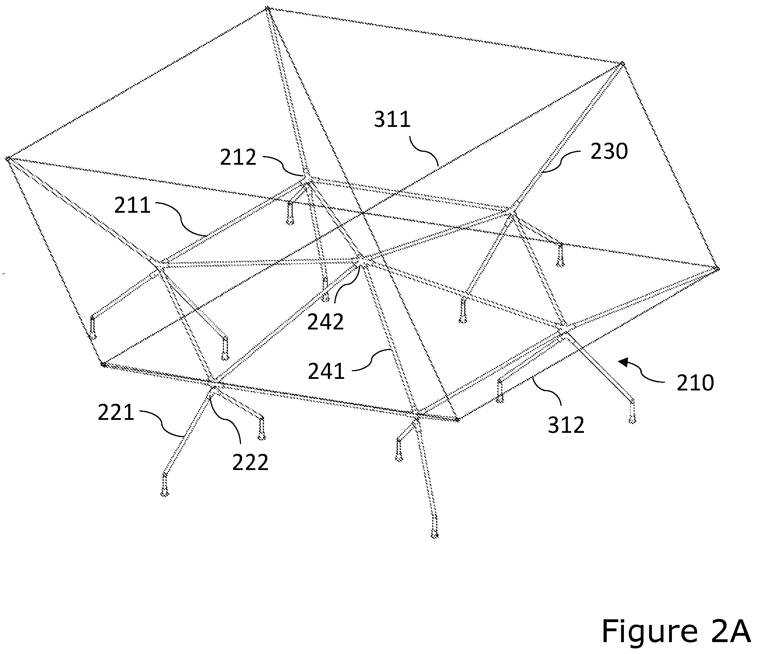

Figures 2A to 2C show the structure of the frame 200 in greater detail, with the net 310 removed. The frame 200 includes a middle perimeter structure 210, which in the present embodiment has the shape of a regular hexagon, matching the hexagonal shape of the receiver 300, but smaller in size. In other embodiments, other polygonal shaped structures may be used, such as triangles, rectangles, diamonds, pentagons, octagons or decagons. In addition, although the present embodiment uses a perimeter structure having a regular polygonal shape, this is not intended to be limiting, and in some embodiments polygonal structures having irregular polygonal shapes may be used. Further, in other embodiments the shape of the frame 200 may differ from the shape of the receiver 300.

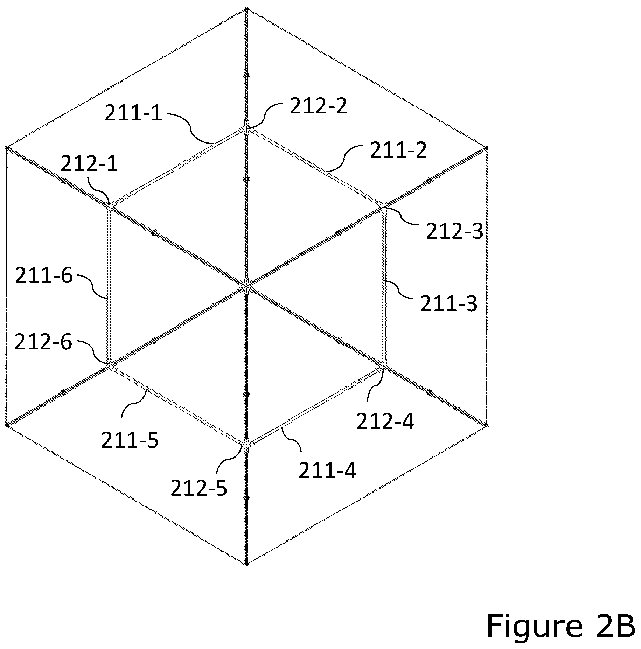

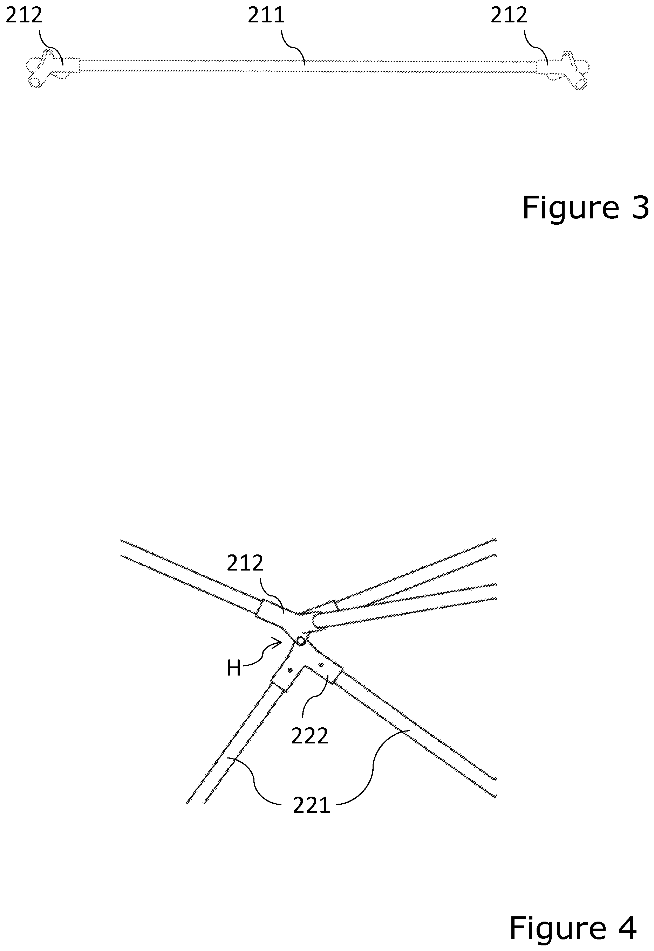

The hexagonal perimeter structure 210 is planar and includes six elongate perimeter rods 211, referenced individually in Figure 2B as 211-1 to 211-6. The perimeter rods 211-1 to 211-6 are each of the same length, and each perimeter rod 211 forms a side of the regular hexagonal structure 210. The perimeter rods 211-1 to 211-6 are coupled to each other by six perimeter couplings 212, referenced individually in Figure 2B as 212-1 to 212-6, which are disposed at the vertices of the hexagonal perimeter structure 210. Figure 3 shows a detailed view of a perimeter rod 211, each end of which is coupled to a perimeter coupling 212. In use, the perimeter rods 211-1 are under tension.

With reference to Figure 2A, the frame 200 further includes twelve elongate leg rods 221 which are coupled to the perimeter structure 210 and extend downward from the perimeter structure 210. The leg rods 221 provide clearance between the perimeter structure 210 and the surface over which the vehicle is travelling. The perimeter structure 210 and the leg rods 221 together form part of the linking structure which links the air cushion units together. Each leg rod 221 has a first, upper end coupled to a leg coupling 222, and a second, lower end which is coupled to a respective one of the air cushion units.

In the present embodiment, the twelve leg rods 221 are grouped into six pairs of leg rods 221. The leg rods 221 in each pair of leg rods 221 have their first, upper ends coupled to the same leg coupling 222 and their second, lower ends coupled to respective air cushion units. Hence, in the present embodiment the air cushion units are also grouped into pairs, such that the two air cushion units in each pair are fixed in space relative to each other, and the six pairs of air cushion units can each rotate about six respective axes which lie in the plane of the hexagonal perimeter structure 210.

As shown in Figure 2A, one leg rod 221 in each pair extends outward from the hexagonal perimeter structure 210 so that the connected hovercraft is disposed beyond the hexagonal structure 210, while the other leg rod 221 extends inward so that the connected hovercraft is disposed inside the hexagonal structure 210. Arranging pairs of leg rods in this way provides greater stability for the vehicle compared to using multiple single leg rods. In the present example, the angle between the two leg rods in each pair is 90°. In other embodiments, the angle between the two leg rods in each pair may be anywhere in the range 60° to 120°, for example 70°, 80°,100° or 110°.

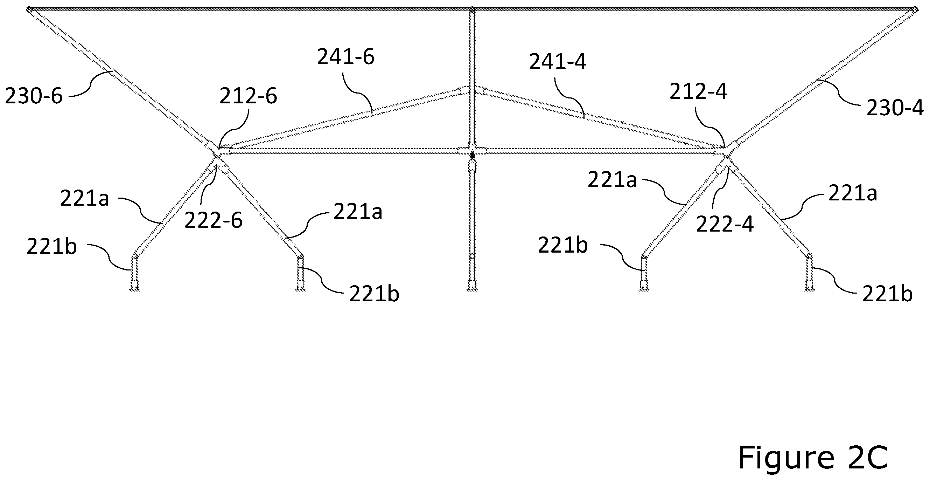

With reference to Figures 2C and 4, each leg coupling 222 is coupled to a corresponding perimeter coupling 212 of the hexagonal structure via a hinge joint H. Each hinge joint H allows each corresponding pair of leg rods 221 to rotate in a plane which is perpendicular to the perimeter structure 210 and which is radial. In other words, as can be seen from Figure 2B the pair of leg rods 221 and leg coupling 222 combination lies in a plane which contains the centre of the perimeter structure 210. The rotation range of each hinge joint is limited to 20°, since rotation of the hinge joint significantly beyond this value may lead to the air cushion units from generating lift in an undesired direction, which may affect the stability of the vehicle. Additionally, the rotation range is limited to prevent the thrust propellers from hitting the carbon fibre tubes of the frame 200. In combination, the hinge joints allow the vehicle to ride over waves whilst keeping the air cushion units flush to the surface of the water, thereby maintaining bag pressure and lift. This allows the vehicle to operate in worse sea conditions than may be possible for conventional ships.

With reference to Figure 2C, in the present embodiment, each leg rod 221 includes a first section 221a connected to the leg coupling 222, and a second section 221b connected to a respective air cushion unit. The second section 221b extends vertically upwards from the air cushion unit, and the first section 221a forms an angle of around 140° with the first section. In some embodiments, the angle between the first section and the second section may be anywhere in the range 110° to 160°. Including the second sections 221b in the leg rods 221 provides clearance between the first angled sections 221a and components (e.g., fans) within the upper portion of the air cushion units.

The linking structure/frame 200 further includes a plurality of elongate receiver support rods 230 which are coupled to the hexagonal perimeter structure 210. The support rods 230 are arranged to suspend the net 310 above the surface that the vehicle is travelling over, and the remainder of the frame 200. In the present embodiment, the support rods 230 stretch the net 310, so that the net 310 is under tension. In some embodiments, the support rods can be omitted, and the receiver cane be coupled directly to the polygonal structure.

In the present embodiment, there are six elongate receiver support rods 230, two of which 230-4, 230-6 are referenced in Figure 2C. The receiver support rods 230 together support the net 310. Each receiver support rod 230 has a proximal, lower end coupled to a respective perimeter coupling 212 of the hexagonal structure 210 and a distal, upper end coupled to a vertex of the net 310. In the present embodiment, the receiver support rods 231 have the same length.

As shown in Figure 2C, each receiver support rod 230 extends upwards from the hexagonal perimeter structure 210 and outwards at a particular angle to a plane defined by the hexagonal structure 210. Using the same angle for all of the receiver support rods 230 helps to achieve uniform deformation of the net 310 and frame 200 during capture of an object, which reduces stress concentrations on the receiver support rods 230 and the perimeter couplings 212. In the present example, the angle is 145°. In some embodiments, the angle may be in the range 90° to 160°, e.g., 100°, 110°, 120°, 130°, 140° or 150°. Increasing this angle increases the capture area of the receiver 300, but may increase the moment to which the receiver support rods 230 subjected.

With reference to Figure 2A, the receiver 300 includes a perimeter cable 312 which is threaded through holes in the distal ends of the receiver support rods 230 and extends around the perimeter of the net 310. The net 310 is attached to the perimeter cable 312 using clips (not shown), such as carabiners. The perimeter cable 312 stretches the sides of the net 310 so that side portions of the net 310 are under tension. The perimeter cable may be omitted in some embodiments.

In addition, in the present embodiment, the receiver 300 includes multiple radial cables 311 which extend across the net 310 between pairs of opposed receiver support rods 230. The radial cables 311 help to support the net 310 and can be used to tension the net 310. The net is attached to radial cables 311 using clips, e.g., carabiners.

With reference to Figures 2A and 2C, the frame 200 further includes six elongate central radial rods 241. Two these central radial rods 241-4, 241-6 are referenced in Figure 2C. Each central radial rod 241 has a distal end coupled to a respective perimeter coupling 212 of the hexagonal structure 210 and a central end coupled to a central coupling 242 at the centre of the hexagonal perimeter structure 210. The radial rods 241 strengthen the overall structure of the vehicle 1. In the present embodiment, the central radial rods 241 and the perimeter couplings 212 are under compression, thereby urging these components together.

As shown in Figure 2C, each central radial rod 241 extends upwards from the hexagonal structure 210 at an angle to a plane defined by the hexagonal structure 210. The angle is generally shallow, to reduce the height of the central coupling 242 and central portion of the central radial rods 241 above the plane defined by the hexagonal structure 210, thereby reducing the risk of the falling object impacting the radial rods 241 when it is received by the net 310. In the present embodiment, the angle is 12°. In other embodiments, the angle may be anywhere in the range 5° to 30°, e.g., 10°, 15°, 20° or 25°.

As can be seen in Figure 2A, each radial cable 311 is disposed directly above a corresponding radial rod 241. In use, when an object impacts one of the radial cables 311, the radial cables will deflect under the weight of the object and prevent the object from impacting the underlying central radial rod 241. The object will subsequently be deflected into a segment of the net 310 between two neighbouring radial cables 311.

Figures 5A to 5C provide views of an individual air cushion unit/hovercraft 100. The air cushion unit includes a hull 110, a descending skirt 120, a controller 130, a power source 140, a vertical fan 150 and a horizontal fan 160. Each of these components is described below.

The flexible skirt 120 extends around and descends downwards from a periphery of the hull 110. In the present embodiment, the skirt 120 is a circular bag skirt. Circular skirts are advantageous because they have no preferential thrust direction, which allows for fast on the spot turning and no differential wind loading. In other embodiments, hydrodynamically shaped skirts or individual boat hulls may be used. Such arrangements reduce drag in the primary thrust direction, at the expense of reduced turning speed. Bag skirts are simple to construct as they are a single continuous volume. In other embodiments, finger skirts may be used. Finger skirts have segmented volumes, and are more difficult to manufacture than bag skirts, but are better able to function with a puncture, or over rough terrain.

The controller 130 is arranged to control the operation of the air cushion unit. In particular, the controller 130 is arranged to control the operation of the vertical fan 150 and the horizontal fan 160. The power source 140 is arranged to provide power to the electrical components of the air cushion unit, such as the local controller 130 and the fans 150, 160.

Using a controller 130 and a power source 140 on each air cushion unit provides several advantages compared to a vehicle having a single central controller and a single central power source. First, if one of the local controllers or local power sources fails, the other air cushion units will remain operable, thereby providing redundancy. Using more compact local controllers and local power sources on each air cushion unit lowers the centre of mass of the air cushion unit, and distributes the overall mass of the vehicle more evenly. The low centre of mass enhances the stability of the vehicle, which allows the vehicle to operate in strong winds, which may flip a traditional hovercraft. Finally, providing a local power source on each air cushion unit provides better heat dissipation compared to using a single central power source.

The controllers 130 of the air cushion units 100 comprise transceivers so that they are able to communicate wirelessly with a master controller (and optionally with each other) which is arranged to set the thrust power and lift power for each air cushion unit 100 according to motion control algorithms. In this embodiment the controllers 130 communicate with the master controller using a controller area network (CAN) bus. Each local controller features a CAN board (which decodes the signal for itself then sends the signal forward). All twelve air cushion units are connected with a cable. As one air cushion unit receives an input from the master, it executes the command and passes it on to the next one in line. In other embodiments the air cushion units may communicate wirelessly.

The master controller is connected to a master wireless communicator which is configured to receive control signals via line-of-sight radio control and/or via a satellite modem. This allows the vehicle to be remotely operated. The controller 130 of one of the air cushion units 100 may serve as the master controller, with the other controllers 130 active as slaves.

In some embodiments, the local power source is a rechargeable battery. In the present embodiment, the local power source 140 is a rechargeable lithium polymer battery. In this embodiment the battery has a capacity of 30 Ah at 22.2 volts, i.e., around 666 Whr. If the vehicle is to be left on station for extended periods, solar arrays may be added to the vehicle 1, e.g., to the frame 200, to recharge the batteries between operations, to increase the operating range of the vehicle. In other embodiments, an internal combustion engine or a hydrogen fuel cell can be used as a power source, which would also increase the operating time and range.

The vertical fan 150 is arranged to provide thrust. In the present embodiment, the vertical fan 150 is a fixed position fan which is arranged to provide thrust in one direction only. Steering the vehicle is achieved by varying the thrust power of the plurality of vertical fans 150, for example by varying the thrust power of vertical fans 150 on one side of the vehicle with respect to the thrust power of the vertical fans 150 on the other side of the vehicle. Hence, by the independent control of all of the vertical fans 150 it is possible to rotate the vehicle with a small turning radius. In alternative embodiments, fans arranged to provide reversible thrust may be used, or rudders or a rotation assembly may be used to direct airflow from the vertical fans. Such arrangements increase the manoeuvrability of the vehicle and provide a tighter turning circle, although the overall complexity of the vehicle is increased.

The horizontal fan 160 is arranged to provide lift. In use, the horizontal fans together provide lift such that the vehicle hovers around 2-3 cm above the surface (e.g., the surface of the sea). The lift generated by the horizontal fans should be sufficient that the vehicle will not dip into the sea when an object impacts the receiver 300. The horizontal fans 160 can also be used to further tighten the turning circle of the vehicle by reducing the power to the horizontal fans 160 on one side of the vehicle, so that the air cushion units on that side come into contact with the water, thereby experiencing significant drag. The frictional force between the air cushion units and the water provides a "water braking" effect and this can be exploited by air cushion units at the left and right side of the vehicle to provide tight turning.

Preferably, the components of the air cushion unit 100 are distributed around the air cushion unit 100 such that their masses cancel, i.e., the centre of mass of the air cushion unit 100 is substantially coincident with the geometric centre of the air cushion unit 100. This minimises the net turning moment of the vehicle 1.

Although the invention has been described above with reference to one or more preferred embodiments, it will be appreciated that various changes or modifications may be made without departing from the scope of the invention as defined in the appended claims.

For example, the capture vehicle described above comprises twelve air cushion units/hovercraft. In other embodiments more or less than twelve air cushion units may be used. For example, the capture vehicle may comprise a multiple of two (6, 8, 10, 14, 16, 18, 20) air cushion units.

The air cushion units of the capture vehicle described above are grouped into linked pairs. In other embodiments the air cushion units may be grouped into triplets or quadruplets. Since the capture vehicle may comprise more or less than twelve air cushion units, the capture vehicle may comprise a multiple of three (6, 9, 15, 18, 21, 24) or four (8, 16, 20, 24, 28) air cushion units.

The capture vehicle described comprises a hexagonal middle perimeter structure 210. In other embodiments the perimeter structure may be a polygonal shape other than hexagonal. For example, a circular structure may be used instead of a polygonal structure. Such a circular structure may be formed from a single circular perimeter member, or may comprise a plurality of arc-shaped perimeter members joined by suitable perimeter couplings.

For the capture vehicle described above the rotation range of each hinge joint H is limited to 20°. In other embodiments the rotation range may be more or less than 20°. For example, the rotation range may be 15°, 16°, 17°, 18°, 19°, 21°, 22°, 23°, 24° or 25°. Furthermore the rotation range of hinge joint H may be symmetrical (i.e., it can rotate equally in both directions from its at-rest position, or may be asymmetrical.

For the capture vehicle described above the net 310 is attached to the perimeter cable 312 using clips. In other embodiments the net 310 may be threaded through the mesh in the net 310 or through apertures specifically formed in the net 310. In other embodiments the net 310 may be attached to the perimeter cable 312 using other attachment means, e.g., crimps, cable ties, straps etc..

## Claims

1. A vehicle (1) for capturing a falling object, the vehicle comprising:
a plurality of air cushion units (100), wherein each of the air cushion units is configured to generate a propulsive force to drive the vehicle and a lift force to elevate the vehicle;
a linking structure (200) arranged to link the air cushion units together; and
a receiver (300) arranged to receive the falling object, wherein the receiver is coupled to the linking structure.

2. A vehicle according to claim 1, wherein the linking structure comprises a perimeter structure (210) having a polygonal shape having n sides, the polygonal structure comprising n perimeter rods (211) each corresponding to a side of the shape, wherein n is a natural number greater than or equal to 3.

3. A vehicle according to claim 2, wherein the linking structure further comprises a plurality of leg rods (221), each leg rod having a proximal end coupled to the perimeter structure (210) and a distal end coupled to a respective air cushion unit (100).

4. A vehicle according to claim 3, wherein the proximal ends of the leg rods (221) are coupled to the perimeter structure (210) via hinge joints (H).

5. A vehicle according to any one of the preceding claims, wherein the linking structure further comprises a support structure arranged to support the receiver (300), optionally wherein the support structure is arranged to place the receiver under tension.

6. A vehicle according to claim 5, wherein the support structure comprises a plurality of receiver support rods (230) arranged to support the receiver (300), each receiver support rod having a proximal end coupled to the perimeter structure (210) and a distal end coupled to the receiver (300), wherein each receiver support rod (230) extends from the perimeter structure inclined to a plane defined by the perimeter structure, and optionally wherein the receiver (300) comprises a perimeter cable (312) which extends around the perimeter of the receiver, between the distal ends of the receiver support rods (230), wherein the perimeter cable is arranged to place the receiver under tension.

7. A vehicle according to any one of the preceding claims, further comprising a plurality of central radial rods (241), each central radial rod (241) having a distal end coupled to the perimeter structure and a central end coupled to a central coupling (242) at a centre of the linking structure, wherein each central radial rod (241) extends from the perimeter structure inclined to a plane of the perimeter structure, and/or wherein the central radial rods are under compression.

8. A vehicle according to any one of the preceding claims, wherein the receiver (300) comprises:
one or more nets (310); or
one or more sheets.

9. A vehicle according to any one of the preceding claims, wherein each of the plurality of air cushion units (100) comprises a power source (140) configured to provide power for the air cushion unit.

10. A vehicle according to any one of the preceding claims, wherein each of the plurality of air cushion units (100) comprises a first fan (150) arranged to generate the propulsive force and a second fan (160) arranged to provide lift.

11. A vehicle according to any one of the preceding claims, wherein each of the plurality of air cushion units (100) has a centre of mass which is substantially coincident with the geometric centre of the air cushion unit.

12. A vehicle according to any one of the preceding claims, wherein each of the plurality of air cushion units (100) comprises a controller (130) configured to control the air cushion unit and a transceiver.

13. A vehicle according to any one of the preceding claims, comprising n air cushion units (100), where n is a natural number greater than or equal to 3, optionally wherein n equals 12.

14. A vehicle according to any one of the preceding claims:
wherein the plurality of air cushion units (100) comprise a plurality of pairs of air cushion units,
wherein:
the two air cushion units (100) in each pair of air cushion units (100) are fixed in space relative to each other;
each pair of air cushion units (100) is arranged to rotate about an axis lying in a plane; and,
the plurality of planes substantially coincide or are parallel.

15. A vehicle as claimed in claim 14, wherein there are twelve air cushion units (100) comprised of six pairs of air cushion units.

## Patentansprüche

1. Fahrzeug (1) zum Erfassen eines fallenden Objekts, das Fahrzeug umfassend:
eine Vielzahl von Luftkisseneinheiten (100), wobei jede der Luftkisseneinheiten dazu ausgebildet ist, eine Vortriebskraft zum Antreiben des Fahrzeugs und eine Auftriebskraft zum Anheben des Fahrzeugs zu erzeugen;
eine Verbindungsstruktur (200), die dazu angeordnet ist, die Luftkisseneinheiten miteinander zu verbinden; und
eine Aufnahmevorrichtung (300), die dazu angeordnet ist, das fallende Objekt aufzunehmen, wobei die Aufnahmevorrichtung mit der Verbindungsstruktur gekoppelt ist.

2. Fahrzeug nach Anspruch 1, wobei die Verbindungsstruktur eine Umfangsstruktur (210) mit einer polygonalen Form mit n Seiten umfasst, wobei die polygonale Struktur n Umfangsstangen (211) umfasst, die jeweils einer Seite der Form entsprechen, wobei n eine natürliche Zahl größer oder gleich 3 ist.

3. Fahrzeug nach Anspruch 2, wobei die Verbindungsstruktur weiter eine Vielzahl von Beinstangen (221) umfasst, wobei jede Beinstange ein proximales Ende, das mit der Umfangsstruktur (210) gekoppelt ist, und ein distales Ende aufweist, das mit einer jeweiligen Luftkisseneinheit (100) gekoppelt ist.

4. Fahrzeug nach Anspruch 3, wobei die proximalen Enden der Beinstangen (221) über Scharniergelenke (H) mit der Umfangsstruktur (210) gekoppelt sind.

5. Fahrzeug nach einem der vorstehenden Ansprüche, wobei die Verbindungsstruktur weiter eine Stützstruktur umfasst, die dazu angeordnet ist, die Aufnahmevorrichtung (300) zu stützen, wobei die Stützstruktur optional dazu angeordnet ist, die Aufnahmevorrichtung unter Spannung zu setzen.

6. Fahrzeug nach Anspruch 5, wobei die Stützstruktur eine Vielzahl von Aufnahmevorrichtungsstützstangen (230) umfasst, die dazu angeordnet sind, die Aufnahmevorrichtung (300) zu stützen, wobei jede Aufnahmevorrichtungsstützstange ein proximales Ende, das mit der Umfangsstruktur (210) gekoppelt ist, und ein distales Ende aufweist, das mit der Aufnahmevorrichtung (300) gekoppelt ist, wobei sich jede Aufnahmevorrichtungsstützstange (230) von der Umfangsstruktur geneigt zu einer durch die Umfangsstruktur definierten Ebene erstreckt, und wobei die Aufnahmevorrichtung (300) optional ein Umfangskabel (312) umfasst, das sich um den Umfang der Aufnahmevorrichtung zwischen den distalen Enden der Aufnahmevorrichtungsstützstange (230) erstreckt, wobei das Umfangskabel dazu angeordnet ist, die Aufnahmevorrichtung unter Spannung zu setzen.

7. Fahrzeug nach einem der vorstehenden Ansprüche, weiter umfassend eine Vielzahl von zentralen radialen Stangen (241), wobei jede zentrale radiale Stange (241) ein distales Ende, das mit der Umfangsstruktur gekoppelt ist, und ein zentrales Ende aufweist, das mit einer zentralen Kopplung (242) in einer Mitte der Verbindungsstruktur gekoppelt ist, wobei sich jede zentrale radiale Stange (241) von der Umfangsstruktur geneigt zu einer Ebene der Umfangsstruktur erstreckt und/oder wobei die zentralen radialen Stangen unter Druck stehen.

8. Fahrzeug nach einem der vorstehenden Ansprüche, wobei die Aufnahmevorrichtung (300) umfasst:
ein oder mehrere Netze (310); oder
eine oder mehrere Bahnen.

9. Fahrzeug nach einem der vorstehenden Ansprüche, wobei jede der Vielzahl von Luftkisseneinheiten (100) eine Energiequelle (140) umfasst, die dazu ausgebildet ist, Energie für die Luftkisseneinheit bereitzustellen.

10. Fahrzeug nach einem der vorstehenden Ansprüche, wobei jede der Vielzahl von Luftkisseneinheiten (100) ein erstes Gebläse (150), das dazu angeordnet ist, die Vortriebskraft zu erzeugen, und ein zweites Gebläse (160) umfasst, das dazu angeordnet ist, Auftrieb bereitzustellen.

11. Fahrzeug nach einem der vorstehenden Ansprüche, wobei jede der Vielzahl von Luftkisseneinheiten (100) einen Massenmittelpunkt aufweist, der im Wesentlichen mit dem geometrischen Mittelpunkt der Luftkisseneinheit zusammenfällt.

12. Fahrzeug nach einem der vorstehenden Ansprüche, wobei jede der Vielzahl von Luftkisseneinheiten (100) eine Steuereinheit (130), die dazu ausgebildet ist, die Luftkisseneinheit zu steuern, und einen Transceiver umfasst.

13. Fahrzeug nach einem der vorstehenden Ansprüche, umfassend *n* Luftkisseneinheiten (100), wobei n eine natürliche Zahl größer oder gleich 3 ist, optional, wobei n gleich 12 ist.

14. Fahrzeug nach einem der vorstehenden Ansprüche:
wobei die Vielzahl von Luftkisseneinheiten (100) eine Vielzahl von Paaren von Luftkisseneinheiten umfasst,
wobei:
die zwei Luftkisseneinheiten (100) in jedem Paar von Luftkisseneinheiten (100) räumlich relativ zueinander fixiert sind;
jedes Paar von Luftkisseneinheiten (100) dazu angeordnet ist, um eine Achse zu rotieren, die in einer Ebene liegt; und,
die Vielzahl von Ebenen im Wesentlichen zusammenfallen oder parallel sind.

15. Fahrzeug nach Anspruch 14, wobei zwölf Luftkisseneinheiten (100) vorhanden sind, die aus sechs Paaren von Luftkisseneinheiten bestehen.

## Revendications

1. Véhicule (1) de capture d'un objet tombant, le véhicule comprenant :
une pluralité d'unités de coussin d'air (100), dans lequel chacune des unités de coussin d'air est configurée pour générer une force de propulsion pour entraîner le véhicule et une force de levage pour soulever le véhicule ;
une structure de liaison (200) agencée pour relier ensemble les unités de coussin d'air ; et
un récepteur (300) agencé pour recevoir l'objet tombant, dans lequel le récepteur est couplé à la structure de liaison.

2. Véhicule selon la revendication 1, dans lequel la structure de liaison comprend une structure périmétrique (210) présentant une forme polygonale présentant n côtés, la structure polygonale comprenant n tiges périmétriques (211) correspondant chacune à un côté de la forme, dans lequel n est un nombre naturel supérieur ou égal à 3.

3. Véhicule selon la revendication 2, dans lequel la structure de liaison comprend en outre une pluralité de tiges (221) de jambe, chaque tige de jambe présentant une extrémité proximale couplée à la structure périmétrique (210) et une extrémité distale couplée à une unité de coussin d'air (100) respective.

4. Véhicule selon la revendication 3, dans lequel les extrémités proximales des tiges (221) de jambe sont couplées à la structure périmétrique (210) via des joints (H) de charnière.

5. Véhicule selon l'une quelconque des revendications précédentes, dans lequel la structure de liaison comprend en outre une structure de support agencée pour supporter le récepteur (300), facultativement dans lequel la structure de support est agencée pour mettre le récepteur sous tension.

6. Véhicule selon la revendication 5, dans lequel la structure de support comprend une pluralité de tiges de support (230) de récepteur agencées pour supporter le récepteur (300), chaque tige de support de récepteur présentant une extrémité proximale couplée à la structure périmétrique (210) et une extrémité distale couplée au récepteur (300), dans lequel chaque tige de support (230) de récepteur s'étend depuis la structure périmétrique inclinée vers un plan défini par la structure périmétrique, et facultativement dans lequel le récepteur (300) comprend un câble périmétrique (312) qui s'étend autour du périmètre du récepteur, entre les extrémités distales des tiges de support (230) de récepteur, dans lequel le câble périmétrique est agencé pour mettre le récepteur sous tension.

7. Véhicule selon l'une quelconque des revendications précédentes, comprenant en outre une pluralité de tiges radiales centrales (241), chaque tige radiale centrale (241) présentant une extrémité distale couplée à la structure périmétrique et une extrémité centrale couplée à un couplage central (242) au niveau d'un centre de la structure de liaison, dans lequel chaque tige radiale centrale (241) s'étend depuis la structure périmétrique inclinée vers un plan de la structure périmétrique, et/ou dans lequel les tiges radiales centrales sont sous compression.

8. Véhicule selon l'une quelconque des revendications précédentes, dans lequel le récepteur (300) comprend :
un ou plusieurs filets (310) ; ou
une ou plusieurs feuilles.

9. Véhicule selon l'une quelconque des revendications précédentes, dans lequel chacune de la pluralité d'unités de coussin d'air (100) comprend une source d'alimentation (140) configurée pour fournir de la puissance à l'unité de coussin d'air.

10. Véhicule selon l'une quelconque des revendications précédentes, dans lequel chacune de la pluralité d'unités de coussin d'air (100) comprend un premier ventilateur (150) agencé pour générer la force de propulsion et un deuxième ventilateur (160) agencé pour fournir un levage.

11. Véhicule selon l'une quelconque des revendications précédentes, dans lequel chacune de la pluralité d'unités de coussin d'air (100) présente un centre de masse qui est sensiblement coïncident avec le centre géométrique de l'unité de coussin d'air.

12. Véhicule selon l'une quelconque des revendications précédentes, dans lequel chacune de la pluralité d'unités de coussin d'air (100) comprend un dispositif de commande (130) configuré pour commander l'unité de coussin d'air et un émetteur-récepteur.

13. Véhicule selon l'une quelconque des revendications précédentes, comprenant n unités de coussin d'air (100), où *n* est un nombre naturel supérieur ou égal à 3, facultativement dans lequel n est égal à 12.

14. Véhicule selon l'une quelconque des revendications précédentes,
dans lequel la pluralité d'unités de coussin d'air (100) comprend une pluralité de paires d'unités de coussin d'air,
dans lequel :
les deux unités de coussin d'air (100) dans chaque paire d'unités de coussin d'air (100) sont fixées de manière espacée l'une de l'autre ;
chaque paire d'unités de coussin d'air (100) est agencée pour tourner autour d'un axe reposant dans un plan ; et,
la pluralité de plans coïncident sensiblement ou sont parallèles.

15. Véhicule selon la revendication 14, dans lequel il y a douze unités de coussin d'air (100) comprenant six paires d'unités de coussin d'air.
